# EUROPEAN PATENT SPECIFICATION

(11) **EP 1 678 664 B1**
(45) Date of publication and mention of the grant of the patent: **04.04.2007**
(21) Application number: 04790448.7
(22) Date of filing: 15.10.2004
(51) Int. Cl.: G06K 19/06

(54) **METHOD OF RECORDING AND READING DIGITAL DATA ON A PHOTOGRAPHIC SUPPORT**
VERFAHREN ZUM AUFZEICHNEN UND LESEN DIGITALER DATEN AUF EINEM PHOTOGRAPHISCHEN TRÄGER
PROCEDE D'IMPRESSION DE DONNEES NUMERIQUES SUR UN SUPPORT PHOTOGRAPHIQUE ET DE LECTURE DE CES DONNEES

(30) Priority: 29.10.2003 FR 0312627
(43) Date of publication of application: 12.07.2006
(73) Proprietor: EASTMAN KODAK COMPANY, Rochester, New York 14650 (US)
(72) Inventor: PRIGENT, Thierry, Kodak Industrie, F-71102 Chalon-sur-SaôneCedex (FR)
(74) Representative: Weber, Etienne Nicolas
(86) International application number: PCT/EP2004/011594
(87) International publication number: WO 2005/048177

(56) References cited:
- EP-A- 0 403 376
- WO-A-00/77726
- US-A- 4 783 672

## Description

### FIELD OF THE INVENTION

The present invention relates to a method of recording, and a method of reading data recorded on a photographic support, such as in particular a film. Such a method of recording and reading is described in document EP-A-0 311 234. Although enabling the recording of analog data, the process is aimed more precisely at the recording of digital data.

The invention has applications in various fields demonstrating the need to record a large quantity of data, and the need to be able to retrieve these data reliably, independently of time alterations. One particular application is the recording of data relating to images captured on a film. The same film thus serves as image support and data support. The data are for example metadata related to the images. They give the conditions and circumstances in which the images were captured or treated. Another application is more simply that of reliable data conservation, whatever its nature.

### BACKGROUND OF THE INVENTION

Documents (1-7) whose references are specified at the end of the description describe various data recording techniques. They describe data recording as barcodes especially. Barcodes are elongated marks capable of being carried by various types of supports. Barcodes can be carried especially by a paper support or a photographic support.

An encoding function is used for writing barcodes. It enables the data to be recorded to be converted into a series of marks. The encoding, generally binary, i.e. to base 2, is demonstrated by a series of black and white marks, or more precisely by the presence or not of black marks in a series of set locations.

Document (7) proposes a particular encoding. This is ternary encoding, i.e. to base 3. Ternary encoding is demonstrated by white, black and gray marks.

### SUMMARY OF THE INVENTION

The invention is based on the desire to increase information density, which means recording a greater quantity of data on the same support surface. This can take place by replacing binary or ternary barcodes by codes as marks with many gray levels. A different gray level can be linked to each possible value of data encoded in an encoding base with rows N more than 3. The number of gray levels, possibly including white and black, is then N.

Such encoding however has a number of difficulties.

A first difficulty is linked to the possibility of distinguishing the gray levels of the marks. In other words, it is a question of determining to which numerical value a read gray level corresponds. This difficulty does not exist for simple encoding such as binary encoding. Indeed, the most rudimentary reading devices are capable of distinguishing a black (or dark) mark from a white (or light) mark. Indeed it is easy to set a threshold enabling a mark to be considered as dark or light enough to be likened to a white or black mark. Reading marks with a single level of gray intermediate between black and white, corresponding to ternary encoding, is more complicated. However, it does not represent an insurmountable implementation difficulty.

Nevertheless, the difficulty increases considerably for encoding with a high number of gray levels, more than 3. Such is the case, for example, for an encoding to rows base 256, i.e. to 256 gray levels.

A second difficulty is linked to the aging of the support. Indeed, wear in time, risks turning the marks pale or causing their partial evanescence. So, a gray level used to encode an initial value of a recorded data can turn pale and risk being linked, during a later reading, to a different value.

A third difficulty must be mentioned. This is specific to recording of marks on a photographic film. On this type of support, marks are made by light exposure. Each digital value of encoded data is demonstrated, for example, by an exposure value. A more or less long or intense exposure corresponds respectively to more or less high values of the data to be recorded. The support is then developed. Then the marks appear as more or less dense zones, according to their value. Now, the density of a zone does not depend only on the exposure energy received by this zone, but also on the chemical processing that it received. Thus a mark having a given density can be likened to an exposure energy, and thus to a digital value of the data, which is not that initially recorded.

This difficulty also increases with the number of different gray levels used for the encoding.

The goal of the present invention is to propose a recording method a recorded data reading method and a photographic support that do not have the above-mentioned difficulties. This is achieved with the features of claims 1, 10 and 13.

It is also a goal to propose such methods particularly suited to long-lasting data recording on a silver photographic film.

It is a further goal to propose methods enabling the reading of data on supports having undergone significant aging or poorly controlled chemical processing.

To achieve these goals, the invention relates more precisely to an autonomous method of recording data on a photographic support, comprising the formation on the support of many encoding marks, with a number of density levels N more than 3, linked to many data items to be recorded, each encoding mark being formed with an exposure energy which is a preset function of a data value to be recorded linked to the mark, and the formation, on the same support, of at least one sensitometry control, the sensitometry control covering a range of exposure energies used to form the marks. The combined use of a sensitometric relation that supplies the control, and the function establishing the exposure energies of the marks, enables, after development of the support, a relation to be made between the optical densities of the marks and the value of the encoded data respectively linked to the marks.

The "photographic support" terms do not mean exclusively supports such as silver photographic film. More generally they mean any support capable of receiving marks with various optical densities and/or various colors. Typically they are supports able to carry photos, such as papers, plastics, liquid crystal supports etc. In the same way, the "exposure energy" terms do not mean exclusively light energy. This means light energy in the particular case where the photographic support is a film.

If the marks are formed by a printer on a paper or plastic support, exposure energy must be understood as the command enabling more or less dark marks, for example, to be formed by spraying more or less ink. The following description refers more explicitly to data recording on a photographic film. However, it must not be interpreted in a restrictive way to this type of support only.

The sensitometry control is a conventional control having several ranges having received different exposures, or having an exposure gradient. The exposure energies of a sensitometry control are generally known energies, or at least energies capable of being established by calculation.

In the sense of the invention it is considered that the sensitometry control covers the exposure range of the encoding marks when it enables a sensitometry relation to be established that can be used to link the optical densities of the encoding marks to the exposure energies with enough accuracy to distinguish two close exposure values.

This does not necessarily mean that the exposure energy range of the sensitometry control ranges covers exactly that used for forming the marks. However, this characteristic is considered as an advantage.

The formation of one or more sensitometry controls enables a sensitometry relation to be made at any time between the exposure energies of the photographic support and the optical densities of this support when it is developed. Such a sensitometry relation is usually represented as a curve called the film's "S curve".

The fact that the encoding marks or the sensitometry controls are formed on the same support means that these information elements undergo the same processing and the same alterations in time. In particular, the parts of the same film comprising the marks and the sensitometry control undergo the same chemical development processing. Furthermore, when the marks and the sensitometry control are formed in a more or less concomitant way, they also undergo the same aging and the same thermal constraints.

As stated above, a preset function links the exposure energies of the encoding marks with the digital values of the encoded data. For analog values, the function can express a refined relation, for example. For digital values, the function can be summarized as a simple table that enables a corresponding exposure energy to be linked to each possible value of encoded data. Such a table enables the value of the encoded data to be found when the exposure energy of a mark is known. Conversely it also enables the determination of which energy it is advisable to make a mark corresponding to a value that is required to be recorded. When data are encoded in an encoding base with rows N, the preset function links, for example, a different preset energy exposure value to each of the N possible values of a data encoded in the base with rows N.

As an illustration, when the encoding base is a base with rows 256, as many preset exposure values can be planned for the formation of the marks.

Preferably, the exposure energy of each mark is a one-to-one function of a data value to be recorded. If the function is defined by a table, this means that a single exposure value is linked to each possible value of encoded data and that a single value of encoded data is linked to each exposure energy of the encoding mark. Such a one-to-one function is selected for monochrome recording supports, for example.

For the color recording supports, several different values of encoded data can correspond to the same exposure energy. However, in this case, the encoding marks relative to these values will be of different color, so as to distinguish them.

More generally, on a color photographic support, the encoding marks can be exposed with energies located in at least two spectral ranges of separate sensitivity. In this case, the combination of the exposure energy of each mark, and a spectral exposure range of each mark is a preset one-to-one function of an encoded data value to be recorded.

In a particular implementation of the method, data can be encoded in an encoding base with rows CxN. The preset one-to-one function then links a unique combination of a preset exposure energy value taken from among N and a color range taken from among C to each possible value of encoded data in the base with rows CxN.

As an example, for C valued at 3, a recording can take place with the colors: magenta, cyan and yellow, so as to correspond to the main sensitivity layers of modern color films.

The invention also relates to a method of reading encoded data that have previously been recorded in the way described above.

The reading method comprises, after development of the support, the establishment of at least one sensitometry relation from the sensitometry control, measurement of the optical density of the exposed encoding marks of the support, conversion of the optical density of each mark into at least one exposure energy value by using the sensitometry relation, and, the establishment of a value of the data linked to the mark from the exposure energy and the preset function.

In the case of a recording on a color support, the method can include the establishment of many sensitometry relations corresponding to many spectral exposure ranges, measurement of the optical densities of the encoding marks in these spectral ranges, conversion of the optical densities of each mark into several exposure energy values corresponding respectively to the spectral ranges, and the establishment of a value of the data linked to the mark from the exposure energies and the preset function. In the special case where three spectral ranges are used, for example, ranges centered on the colors: red, green and blue, each encoded value can be linked in a one-to-one way to a triplet of exposure energy values of the encoding mark in the colors: red, green and blue.

The above-mentioned sensitometry relations are mainly sensitometry relations with one dimension. This means that they link the densities and exposure energies, overall or taken in a preset spectral range. A sensitometry relation can be also expressed in a space with several dimensions, corresponding to the color components. In such a space, the density and exposure energy are vectors with components according to the colors that underlie the space.

Thus, as an alternative, the method can still comprise the establishment of a sensitometry relation with several dimensions corresponding to several color components, measurement of the optical density of the exposed marks of the support according to these color components, conversion of the optical density of each mark into exposure energy values taken according to these color components by using the sensitometry relation, and the establishment of a value of the data linked to the mark from the exposure energy and the preset function.

It is worth noting that the possibilities of encoding and recording data using encoding marks on photographic supports, and in particular on color photographic supports are not limited to the examples given above. For example, it is possible to record perfectly independent data in each sensitivity layer of a film. In this case the implementation of the method corresponds to that described for monochrome supports.

Finally the invention relates to a photographic support comprising data encoding marks with a number of density levels N more than 3, and at least one sensitometry control that can be used to convert the densities of the marks into exposure energy values. The support can be a paper or plastic support, or a photographic film.

Other characteristics and advantages of the invention will appear in the following description, with reference to the figures in the appended drawings. This description is given purely as an illustration and is not limiting.

### BRIEF DESCRIPTION OF THE DRAWINGS

Figure 1 is a diagram showing the main aspects of data recording and reading according to a method in compliance with the invention.
Figure 2 is a graph showing one sensitometry relation established according to a method in compliance with the invention and illustrates the use of the sensitometry relation to retrieve the encoded data values.
Figure 3 is an equivalence table of the optical densities D of encoding marks, exposure energies E, and encoded data values V. The table is established from the sensitometry relation illustrated by Figure 2.

### DETAILED DESCRIPTION OF MODES OF IMPLEMENTING THE INVENTION

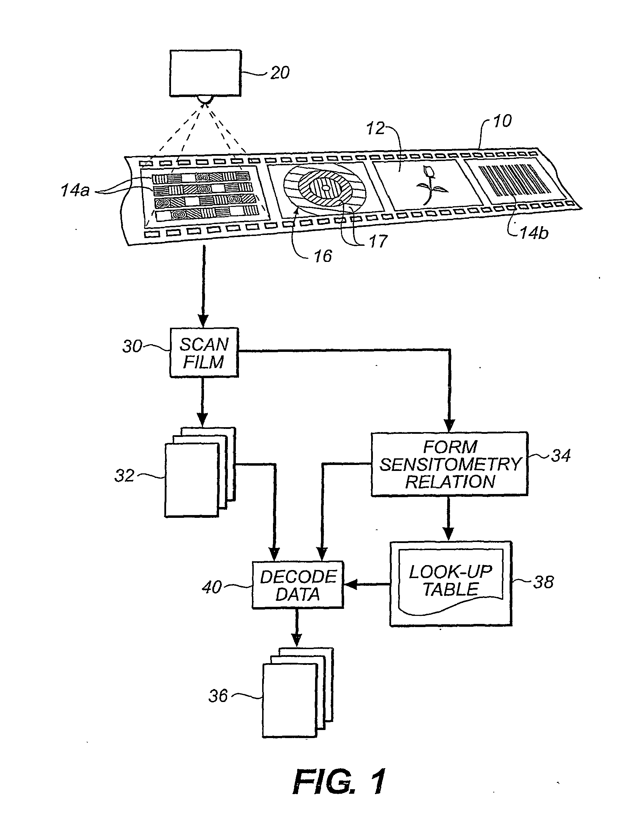

Reference 10 of Figure 1 represents a photographic film such as a motion-picture film, for example.

The film contains the images 12 of scene shots. It also contains data encoding marks 14a, 14b. The marks 14a appear as small squares, and the marks 14b as barcodes. Other mark formats can be planned.

While the film 10 in the illustrated example is a developed film, an exposure head 20 intended to form encoding marks is also represented. It is understood that the marks are formed on the not yet developed film. The exposure head 20 enables each mark to be formed with an exposure energy, and if necessary, an exposure color that depends on the data value to be recorded. The exposure head is controlled by a computer (not shown), intended to convert the data values to be recorded into an energy and possibly a color value. The conversion takes place according to a function expressed, for example, as a look-up table that links the possible data values to be recorded and the exposure energies.

When data is encoded in a base with rows N, it is possible, as previously mentioned, to plan N different "gray" levels or degrees, i.e. N different exposure energies to form marks. When the exposure is made according to several colors, or spectral ranges C, a greater amount of data can be recorded. The encoding can be made from NxC values by taking into account the energies and colors.

According to a preferred embodiment of the method, an energy E₀ located more or less in the center of the film's overall sensitivity range can be selected as reference energy. It corresponds, for example, to the median value of encoded data in a base with rows N. The other possible values of encoded data in a base with rows N are then linked to exposure energies defined in relation to the energy E₀. For example, an energy Eₙ can be defined such that Eₙ = E₀+nxΔE. The value ΔE is here a set energy step and n is a relative whole number (positive or negative).

The exposure head 20, described above, can be housed in a camera. It comprises one or more light sources, possibly with different emission spectra. The supply current level and possibly the supply duration of these sources are modulated according to a computer control signal for writing the encoding marks.

The same exposure head 20 is also used to form on the same film, and preferably in a more or less concomitant way, one or more sensitometry controls. Figure 1 represents a sensitometry control 16. The sensitometry control has several exposure ranges 17 that are exposed with known energies or, at least, energies capable of being found using a calculation model. For clarity purposes of the figure, only a small number of ranges 17 is shown. Knowledge of the exposure energies of the control ranges and measurement of the film's density for these ranges enable the points of a sensitometry curve to be defined and thus a sensitometry relation between the film's density and the exposure energy. The sensitometry control ranges can be monochrome or in colors. In the latter case several sensitometry relations, corresponding to several colors, or a sensitometry relation in several dimensions, according to several color components, can be established.

The use of sensitometry controls to establish sensitometry relations or curves is known in itself and is therefore not described further here.

It is worth stating that different heads can be used for forming the encoding marks and the sensitometry control. However, this would be less advantageous. The use of several heads would entail the difficulty of calibrating them in a uniform way or taking into account an exposure offset.

By using a single head, it is possible, for example, to select the exposure energy of one of the sensitometry control ranges as reference energy for writing the encoding marks. This is the energy E mentioned above. It can correspond or not to a particular data value.

According to another possibility, a particular encoding mark can be produced with the reference exposure energy E₀. Such a mark can be produced with the single writing head or with the specific writing head of the encoding marks.

After film development, an operation shown by the reference 30 consists in scanning the film. During this operation, digital codes are linked to the reading pixels of the film or to zones of the film. In particular, digital codes are linked to the encoding marks and to the sensitometry control ranges. Preferably the same scanner equipment is used for reading the marks and the sensitometry control. This also ensures uniformity of the read values.

Furthermore, the scanner is preferably adjusted to fully cover the density range of the encoding marks, while framing it closely to make best use of its resolution.

For a color film, it is possible to link, to each pixel or zone, several digital codes, corresponding to several color components. The digital code value demonstrates, for the relevant color component, the film's density.

Assuming that each encoding mark is more or less uniform in itself, at least locally, it is possible to link a unique digital code to each mark. As previously mentioned, several digital codes can be also linked to the same mark by taking its density according to several color components. The digital codes of the encoding marks are gathered as files of non-decoded data 32.

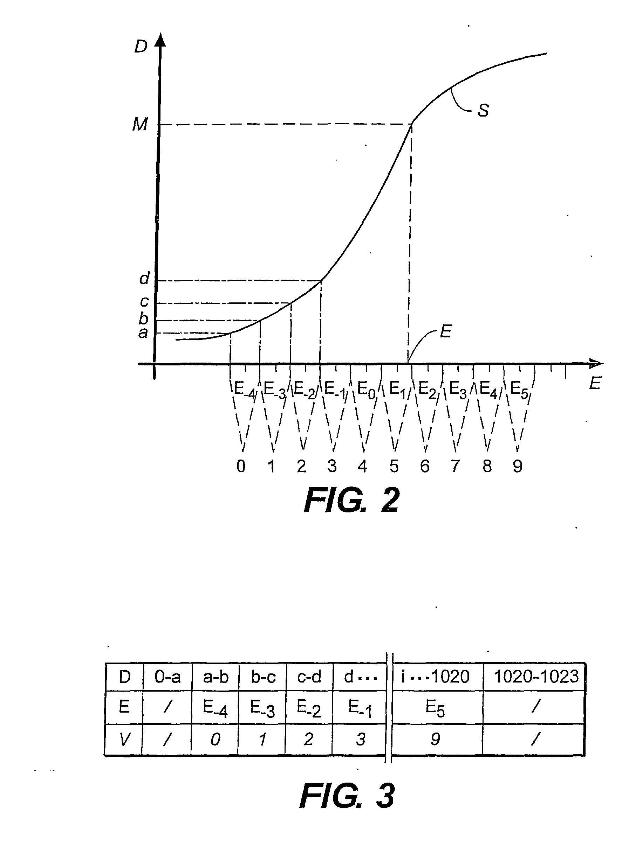

Similarly, digital codes are linked to the exposure ranges 17 of the sensitometry control. These codes are used in a step of forming a sensitometry relation shown by the reference 34. The sensitometry relation can be summarized as a value table linking digital codes to exposure energies. Interpolation values may be created. An illustration of the sensitometry relation is given by Figure 2, as a sensitometry curve S.

A next step is shown with the reference 40 in the Figure 1. This entails the decoding of data contained in the files 32 to establish the values of recorded encoded data. These values are represented as files 36 of decoded data. The decoding can use a look-up table 38, built from the sensitometry relation and the function linking the energies to the encoded values. Such a table is described later with reference to Figure 3. The decoding operation itself is described below in relation to the Figure 2.

For clarity purposes of the Figure 2, the description refers to a data recording on a monochromatic support, so that a single sensitometry relation in one dimension is used. The data reading principle on a color support is nevertheless the same, except that it refers to several sensitometry relations with one dimension or to a sensitometry relation with several dimensions. These are difficult to represent as curves.

Figure 2 is a graph whose Y-axis indicates the digital values delivered by the scanner used for reading the sensitometry control. These digital values demonstrate the film's density in the relevant range. When the control has a single range with a density gradient, the values demonstrate the density according to a coordinate on the range.

The X-axis gives the exposure energies. As previously mentioned, the exposure energy of the ranges, or the energy at a given point of a range having a gradient, is known or can be found by calculation.

On the X-axis, several energy ranges are represented, centered on the energy values E₋₄ to E₄ through E₀. An encoded data value is linked to each of these energy ranges. The values go from 0 to 9, in the illustrated example, which corresponds to a decimal encoding. The correspondence between a value between 0 and 9 and one of the energy ranges corresponds, in this case, to the preset function that links the recorded data values and the exposure energies used to form the encoding marks corresponding to these data.

A curve S, obtained from a sensitometry control is shown in Figure 2. It links the digital values, i.e. the film's optical densities, and the exposure energies. It demonstrates a sensitometry relation.

When an encoding mark is read by the scanner, a digital value M is linked to it. The value M is one of the values taken in the scanner's digital output range. It is, for example, an integer between 0 and 1023 for a scanner whose output is encoded to 10 bits. The digital value M demonstrates the density of the relevant encoding mark.

The curve S, or an equivalence table corresponding to the sensitometry relation, is used to link an energy value E to the digital value M. In the example of Figure 2, the energy E is included in an energy range centered on E1 to which the value 5 corresponds. The value of the recorded data represented by the encoding mark is thus 5.

Similarly, all the encoding marks can be decoded and converted into values, calculated or not.

The decoding can be rationalized by using look-up tables that directly link the digital values supplied by the scanner to values of the encoded data.

This is illustrated by the table of Figure 3. The first line shows the digital density values D delivered by the scanner, the second line the energy values E linked to it by the sensitometry relation, and the last line the encoded data values V linked to it. The table of Figure 3 corresponds to the sensitometry relation of Figure 2. For a sensitometry relation with several dimensions, the table values could be vectors and not scalar.

By selecting only the first and last lines of this table, a look-up table can be built. The values of the first line go from 0 to 1023, those of the last line from 0 to 9.

When the digital value from the scanner is between 0 and a, no encoded value is linked to it. These digital values are out of the sensitivity range of the film used for the recording. It's the same for values between 1020 and 1023, in this particular example.

For digital density values between a and b, the encoded value is 0, for digital density values between b and c, the encoded value is 1, etc. The look-up table thus links the digital value ranges to the encoded values on a one-to-one basis. The range limits correspond to the limits of the energy ranges defined around the values:

E_{-4...}E₀...E₄ previously given. As an illustration the limits a, b, c, d, of the first energy ranges are given on Figure 2. In the case of an encoding to base 256, i.e. with 256 gray levels, the number of energy ranges would of course correspond.

When the light source used for recording the marks is sufficiently accurate and well controlled, the only energy values of the encoding marks should be the values E₋₄ ... E₀ ... E₄, or values that are very close. However, it is possible to foresee a situation where a mark would be read with an energy corresponding exactly to the border between two energy ranges. In this case the question would be to know which energy value, and therefore, which encoded value, must be linked to it.

Such a difficulty can easily be overcome by planning control data in addition to the data to be recorded. The value of the control data is then used as proof of the other recorded data. When there is an ambiguity between two encoded values, it is sufficient to select the one that satisfies the proof operation. Various known proof operations may suit. As an example the operation called "casting out nines", based on the property of any integer, and the sum of the digits comprising it, to have the same remainder in the Euclidean division by nine.

## Claims

1. A method of recording data on a photographic support (10), comprising the formation on the support of a plurality of encoding marks (14a, 14b) with a number of density levels N more than 3, said encoding marks being linked to a plurality of data items to be recorded, each encoding mark being formed with an exposure energy that is a preset function of a value of the data to be recorded linked to the mark and the formation, on the same support, of at least one sensitometry control (16), the sensitometry control covering a range of exposure energies used to form the marks.

2. A method according to Claim 1, wherein the photographic support is a film and wherein the exposure energy is light energy.

3. A method according to Claim 1, wherein the data are encoded in an encoding base with rows N, more than 3, and wherein the preset function links a different preset energy exposure value to each of the possible values of a data encoded in the base with rows N.

4. A method according to Claim 3, wherein the encoding base is a base with rows 256, and wherein 256 preset exposure values are planned for forming the marks.

5. A method according to Claim 1, wherein the exposure energy of each mark is a one-to-one function of a data value to be recorded.

6. A method according to Claim 1, adapted to the recording of data on a color photographic support in which the encoding marks are exposed with an energy located in at least two separate spectral ranges of sensitivity of the support, the combination of the exposure energy of each range, and an exposure spectral range of each range, being a preset one-to-one function of a linked data value to be recorded.

7. A method according to Claim 1, wherein the data are encoded in an encoding base with rows CxN, and wherein the preset one-to-one function links a unique combination of a preset exposure energy value taken from among N and a color range taken from among C to each possible value of encoded data in the base with rows CxN.

8. A method according to Claim 1, wherein the encoding marks have an elongated barcode shape.

9. A method according to Claim 1, wherein the encoding marks (14a, 14b) and the sensitometry control (16) are formed using the same exposure source.

10. A method of reading recorded encoded data according to Claim 1, comprising, after development of the support, the establishment (34) of at least one sensitometry relation (S) from the sensitometry control (16), measurement of the optical density of the exposed encoding marks of the support, conversion of the optical density of each mark into at least one exposure energy value by using the sensitometry relation (S), and the establishment of a value of the data linked to the mark from the exposure energy and the preset function.

11. A method according to Claim 10, comprising the establishment (34) of a plurality of sensitometry relations corresponding to a plurality of spectral exposure ranges, measurement of the optical densities of the encoding marks in these spectral ranges, conversion (40) of the optical densities of each mark into several exposure energy values corresponding to the spectral ranges, and the establishment of a value of the data linked to the mark from the exposure energies and the preset function.

12. A method according to Claim 10, comprising the establishment of a sensitometry relation with several dimensions corresponding to several color components, measurement of the optical density of the exposed marks of the support according to these color components, conversion of the optical density of each mark into exposure energy values taken according to these color components by using the sensitometry relation, and, the establishment of a value of the data linked to the mark from the exposure energy values and the preset function.

13. A photographic support (10) comprising data encoding marks (14a, 14b) with a number of density levels N more than 3, and at least one sensitometry control (16) that can be used to convert the densities of the marks into exposure energy values, said sensitometry control covering a range of exposure energies used to form said marks.

## Patentansprüche

1. Verfahren zum Aufzeichnen von Daten auf einem fotografischen Träger (10), mit dem Schritt des Ausbildens einer Vielzahl von Codierungsmarkierungen (14a, 14b) auf dem Träger, wobei die Codierungsmarkierungen eine Anzahl N von Dichtepegeln aufweisen, die größer ist als 3, wobei die Codierungsmarkierungen verknüpft sind mit einer Vielzahl von aufzuzeichnenden Dateneinheiten und wobei jede Codierungsmarkierung mit einer Belichtungsenergie ausgebildet wird, die eine vorgegebene Funktion eines aufzuzeichnenden Wertes der mit den Markierungen verknüpften Daten ist, und mit dem Schritt des Ausbildens mindestens einer Sensitometriesteuerung (16) auf dem selben Träger, wobei die Sensitometriesteuerung einen Bereich von Belichtungsenergien abdeckt, die zum Ausbilden der Markierungen verwendet werden.

2. Verfahren nach Anspruch 1, worin der fotografische Träger ein Film ist und es sich bei der Belichtungsenergie um Lichtenergie handelt.

3. Verfahren nach Anspruch 1, worin die Daten in einer Codierungseinrichtung mit mehr als 3 Reihen N codiert werden und die vorgegebene Funktion jeweils einen anderen vorgegebenen Energiebelichtungswert mit jedem der möglichen Werte von in der Codierungseinrichtung mit N Reihen codierten Daten verknüpft.

4. Verfahren nach Anspruch 3, worin die Codierungseinrichtung eine Einrichtung mit 256 Reihen ist und worin 256 vorgegebene Belichtungswerte zum Ausbilden der Markierungen eingeplant sind.

5. Verfahren nach Anspruch 1, worin die Belichtungsenergie für jede Markierung eine Eins-zu-eins-Funktion eines aufzuzeichnenden Datenwertes ist.

6. Verfahren nach Anspruch 1, für das Aufzeichnen von Daten auf einem farbfotografischen Träger, wobei die Codierungsmarkierungen mit einer Energie belichtbar sind, die in mindestens zwei getrennten spektralen Empfindlichkeitsbereichen des Trägers vorgesehen ist, wobei die Kombination aus der Belichtungsenergie eines jeden Bereichs und einem Belichtungsspektralbereich für jeden Bereich eine vorgegebene Eins-zu-eins-Funktion eines aufzuzeichnenden verknüpften Datenwertes ist.

7. Verfahren nach Anspruch 1, worin die Daten in einer Codierungseinrichtung mit mehr als CxN Reihen codiert werden und die vorgegebene Eins-zu-eins-Funktion eine einzige Kombination aus einem vorgegebenen, aus N entnommenen Belichtungsenergiewert und einem aus C entnommenen Farbbereich mit jedem möglichen Wert für codierte Daten in der Einrichtung mit CxN Reihen verknüpft.

8. Verfahren nach Anspruch 1, worin die Codierungsmarkierungen eine langgestreckte Strichcodeform aufweisen.

9. Verfahren nach Anspruch 1, worin die Codierungsmarkierungen (14a, 14b) und die Sensitometriesteuerung (16) unter Verwendung der gleichen Belichtungsquelle ausgebildet werden.

10. Verfahren zum Lesen aufgezeichneter, codierter Daten gemäß Anspruch 1, worin nach der Entwicklung des Trägers die Festlegung (34) mindestens einer sensitometrischen Beziehung (S) mittels der Sensitometriesteuerung (16), die Messung der optischen Dichte der belichteten codierten Markierungen auf dem Träger, die Umwandlung der optischen Dichte für jede Markierung in mindestens einen Belichtungsenergiewert unter Verwendung der sensitometrischen Beziehung (S), und die Festlegung eines Wertes für die mit der Markierung verknüpften Daten anhand der Belichtungsenergie und der vorgegebenen Funktion erfolgt.

11. Verfahren nach Anspruch 10, mit den Schritten der Festlegung (34) einer Vielzahl sensitometrischer Beziehungen entsprechend einer Vielzahl spektraler Belichtungsbereiche, der Messung der jeweiligen optischen Dichte der Codierungsmarkierungen in den spektralen Bereichen, der Umwandlung (40) der optischen Dichte für jede Markierung in mehrere Belichtungsenergiewerte entsprechend den spektralen Bereichen, und der Festlegung eines Wertes für die mit der Markierung verknüpften Daten anhand der Belichtungsenergien und der vorgegebenen Funktion.

12. Verfahren nach Anspruch 10, mit den Schritten der Festlegung einer sensitometrischen Beziehung mit mehreren Dimensionen entsprechend mehreren Farbkomponenten, der Messung der jeweiligen optischen Dichte der belichteten Markierungen auf dem Träger gemäß den Farbkomponenten, der Umwandlung der optischen Dichte einer jeden Markierung in Belichtungsenergiewerte entsprechend den Farbkomponenten unter Verwendung der sensitometrischen Beziehung, und der Festlegung eines Wertes für die mit der Markierung verknüpften Daten anhand der Belichtungsenergiewerte und der vorgegebenen Funktion.

13. Fotografischer Träger (10) mit Datencodierungsmarkierungen (14a, 14b) mit einer Anzahl N von Dichtepegeln, die größer ist als 3, und mit mindestens einer Sensitometriesteuerung (16), die verwendbar ist zum Umwandeln der Dichtewerte der Markierungen in Belichtungsenergiewerte, wobei die Sensitometriesteuerung einen Bereich von Belichtungsenergien abdeckt, die zum Ausbilden der Markierungen verwendbar sind.

## Revendications

1. Procédé d'enregistrement de données sur un support photographique (10) comprenant la formation sur le support d'une pluralité de marques de codage (14a, 14b) avec un nombre de niveaux de densité N supérieur à 3, lesdites marques de codage étant associées à une pluralité d'éléments de données à enregistrer, chaque marque de codage étant formée en utilisant une énergie d'exposition qui est une fonction prédéfinie d'une valeur de la donnée à enregistrer associée à la marque et la formation, sur le même support, d'au moins un témoin sensitométrique (16),le témoin sensitométrique couvrant un intervalle d'énergies d'exposition utilisé pour former les marques.

2. Procédé selon la revendication 1, dans lequel le support photographique est un film et dans lequel l'énergie d'exposition est l'énergie lumineuse.

3. Procédé selon la revendication 1, dans lequel les données sont codées dans une base de codage avec des lignes N supérieures à 3 et dans lequel la fonction prédéfinie associe une valeur d'exposition énergétique prédéfinie différente à chacune des valeurs possibles d'une donnée codée dans la base avec des lignes N.

4. Procédé selon la revendication 3, dans lequel la base de codage est une base avec des lignes 256 et dans lequel 256 valeurs d'exposition prédéfinies sont prévues pour former les marques.

5. Procédé selon la revendication 1, dans lequel l'énergie d'exposition de chaque marque est une fonction biunivoque d'une valeur de donnée à enregistrer.

6. Procédé selon la revendication 1 conçu pour l'enregistrement de données sur un support photographique en couleur, dans lequel les marques de codage sont exposées en utilisant une énergie située dans au moins deux intervalles spectraux distincts de sensibilité du support, la combinaison de l'énergie d'exposition de chaque intervalle et un intervalle spectral d'exposition de chaque intervalle, à savoir une fonction biunivoque prédéfinie d'une valeur de donnée associée à enregistrer.

7. Procédé selon la revendication 1, dans lequel les données sont codées dans une base de codage avec des lignes CxN et dans lequel la fonction biunivoque prédéfinie associe une combinaison unique d'une valeur d'énergie d'exposition prédéfinie choisie parmi N et une gamme chromatique choisie parmi C à chaque valeur possible des données codées dans la base avec les lignes CxN.

8. Procédé selon la revendication 1, dans lequel les marques de codage ont la forme d'un code-barre allongé.

9. Procédé selon la revendication 1, dans lequel les marques de codage (14a, 14b) et le témoin sensitométrique (16) sont formés en utilisant la même source d'exposition.

10. Procédé de lecture de données codées enregistrées selon la revendication 1, comprenant, après le développement du support, l'établissement (34) d'au moins une relation sensitométrique (S) à partir du témoin sensitométrique (16), la mesure de la densité optique des marques de codage exposées du support, la conversion de la densité optique de chaque marque en au moins une valeur d'énergie d'exposition en utilisant la relation sensitométrique (S) et l'établissement d'une valeur de la donnée associée à la marque à partir de l'énergie d'exposition et de la fonction prédéfinie.

11. Procédé selon la revendication 10 comprenant l'établissement (34) d'une pluralité de relations sensitométriques correspondant à une pluralité d'intervalles d'exposition spectraux, la mesure des densités optiques des marques codées dans ces intervalles spectraux, la conversion (40) des densités optiques de chaque marque en plusieurs valeurs d'énergie d'exposition correspondant aux intervalles spectraux et l'établissement d'une valeur de la donnée associée à la marque à partir des énergies d'exposition et de la fonction prédéfinie.

12. Procédé selon la revendication 10 comprenant l'établissement d'une relation sensitométrique à plusieurs dimensions correspondant à plusieurs composantes chromatiques, la mesure de la densité optique des marques exposées du support selon ces composantes chromatiques, la conversion de la densité optique de chaque marque en valeurs d'énergie d'exposition tirées de ces composantes chromatiques en utilisant la relation sensitométrique et l'établissement d'une valeur de la donnée associée à la marque à partir des valeurs d'énergie d'exposition et de la fonction prédéfinie.

13. Support photographique (10) comprenant des marques de codage de données (14a, 14b) avec un nombre de niveaux de densité N supérieur à 3 et au moins un témoin sensitométrique (16) pouvant être utilisé pour convertir les densités des marques en valeurs d'énergie d'exposition, ledit témoin sensitométrique couvrant un intervalle d'énergies d'exposition utilisé pour former lesdites marques.
